# EUROPEAN PATENT APPLICATION

(11) **EP 1 447 928 A1**
(43) Date of publication of application: **18.08.2004**
(21) Application number: 03003126.4
(22) Date of filing: 13.02.2003
(51) Int. Cl.: H04H 1/00, H04N 5/44, H04N 7/00

(54) **Receiver for TV and/or radio programs and method for monitoring TV and/or radio programs**

(71) Applicant: Harman/Becker Automotive Systems (Becker Division) GmbH, 76307 Karlsbad (DE)
(72) Inventor: Zehnle, Guido, 76571 Gaggenau (DE); Conzelmann, Werner, 75334 Straubenhardt (DE)
(74) Representative: Beetz & Partner Patentanwälte

(57) **Abstract**

A receiver (10) for TV and/or radio programs comprises a reception means (20) for selectively receiving TV and/ or radio signals and processing them, designating means (21) for designating at least one TV and/or radio program of interest, monitoring means (22) for monitoring availability of the one or more designated TV and/or radio programs, and signalling means (23) for generating signals to a user carrying information relating to availability of one or more designated TV and/or radio programs or change-over means (30) for changing over the program received by the reception means in accordance with availability of one or more designated TV and/or radio programs.

## Description

The invention relates to a receiver for TV and/or radio programs and a method for monitoring TV and/or radio programs according to the preamble of the independent claims.

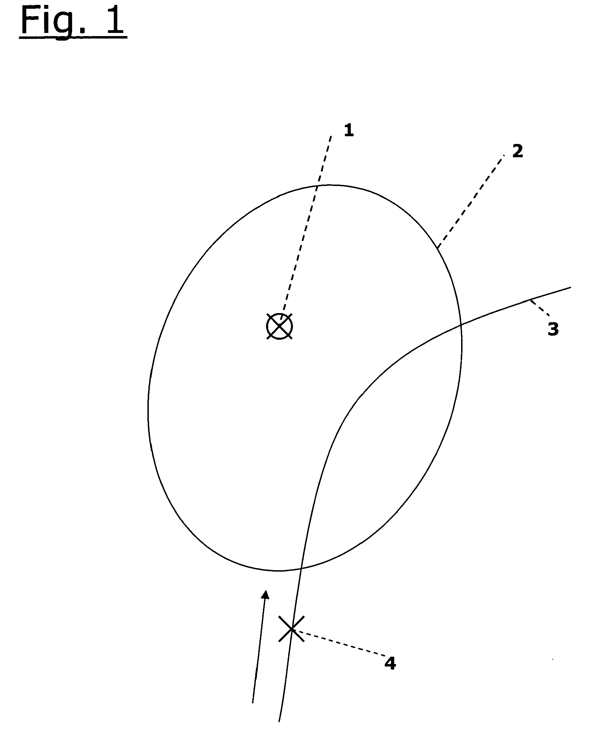

A receiver usually comprises a tuner for selecting a specific frequency, a channel or program to be presented to a user. It may, e.g., a radio program (acoustical) or a TV program (visual and acoustical). However, it may happen that a program of interest is not available. This may particularly be the case in mobile receivers, e.g., in a mobile radio or mobile TV set in a car or the like. Figure 1 schematically shows this situation: 1 symbolizes a sender station emitting a particular program. 2 symbolizes the border up to which the program from sender 1 may be received with a given quality. Note, that due to geographical features the range need not have the form of a circle. 3 symbolizes a road intersecting the range within which the program from sender 1 can be received. 4 denotes a car travelling along road 3 and - at the shown position - not yet being able to receive the program from sender 1 with reasonable quality. A usual approach in this situation is that a user selects another program and, from time to time, checks whether his desired program is already available. If he does not find it, he turns back to the previous program. The above approach has the disadvantage of not being comfortable. Further, in the case of a car driver, the repeated search distracts attention of the driver from traffic and may thus lead to dangerous situations.

Car radio receivers know a so-called "auto-best" function in which the program received by a first tuner and presented to a user is cecked by a second receiver for availability in better quality on another frequency or channel. If such availability is detected, the same program is automatically presented from said channel or frequency with better quality.

It is the object of the invention to provide a method for receiving programs and a receiver for TV and/or radio programs allowing a comfortable and safe tracking of the availability of broadcast programs.

This object is accomplished in accordance with the features of the independent claims. Dependent claims are directed on preferred embodiments of the invention.

A receiver according to the invention for broadcast programs, e.g., for TV and/or radio programs, comprises a conventional receiver as well as monitoring means for monitoring the availability of a designated broadcast program. It further comprises signalling means for generating signals to a user, carrying information relating to availability of one or more of the designated programs. Instead of, or in addition to, the signalling means, change-over means may be provided for changing over the received program in accordance with availability of a designated program. The receiver may be part of a TV set or a radio. Particularly, it may be a mobile receiver adapted to be used in a car or other transportation equipment (ground, air, sea). The designation of the program to be monitored may be made by a user by more or less manual input. A method for monitoring TV and/or radio programs comprises the steps of selectively receiving broadcast signals in a usual manner and monitoring the availability of one or more designated broadcast programs and either signalling related data to a user or changing over the received program in accordance with said availability.

The invention will be described in more detail hereinunder with reference to the accompanying drawings, in which
Fig. 1 schematically shows the situation relating to the availability of broadcast programs,
Fig. 2 shows a receiver according to a first embodiment of the invention,
Fig. 3 shows a receiver according to a second embodiment of the invention, And
Fig. 4 shows an overall TV- or radio set.

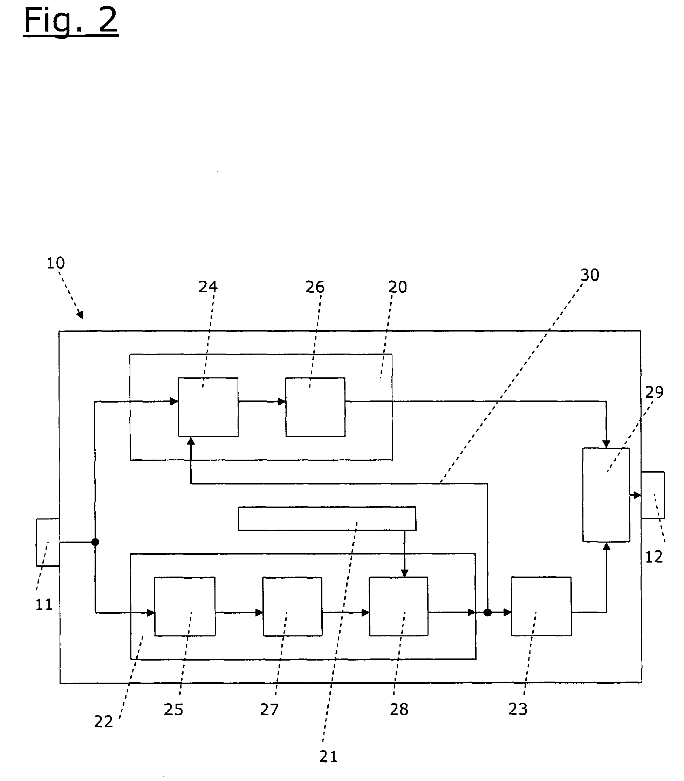

Fig. 2 shows a receiver 10 with a terminal 11 for an antenna for receiving broadcast electromagnetic waves. The receiver 10 also has an output terminal 12 which allows to deliver signals to some kind of output device, e.g., one or more speakers, a cathode ray tube CRT or a liquid crystal display LCD (not shown). Further, not shown input means at the receiver allow the use of the receiver by an operator, particularly channel selection, memory settings and the like. A reception means 20 may operate in a usual manner by receiving signals from the antenna or the terminal 11, perhaps amplifying them, and guiding them towards a tuner 24 which selects one particular frequency which, in turn, is led to further processing in a component 26 (mixing, demodulation, data extraction, ...) in order to generate data ready for display or presentation.

The receiver further has designating means 21 which allow designating one or more broadcast programs of interest, particularly designation of one or more TV and/or radio programs. Designating a program does not necessarily mean that this program is immediately presented to a user. The designation means 21 may be built in one or more of the following ways:
- Manual input of data identifying a specific program by a user, said data possibly containing one or more of frequencies f, a channel number ch, a program code CID, a signal level P.
- "Take-over": the presently received program is taken over as designated program, e.g., when a user realizes that the signal becomes weaker or its quality worsens and wants to find the program again when travelling backward. Appropriate means for said "take-over" are provided, e.g., a button or an option in a menu.
- Designation from memory: a list of particular program codes may be memorized and presented to a user in an appropriate way. From said presentation, the user may pick one or more programs as designated programs.
- "Take the preference": e.g., as default, a program preferably selected by a user, e.g. over time or in numbers of selections, may also be taken and memorized as a designated program.

In one or a plurality of the above-mentioned ways, a specific program may be designated. In this context "program" has the general meaning of a separable information channel or, in more detail, the service of a particular station/company, particularly on differing frequencies in different geographical regions. In the terminology of this specification, the term "designated program" may address a program monitored for availability, whereas a "selected program" is a program presented to a user.

22 symbolizes a monitoring means which monitors the availability of one or more designated programs. The monitoring means may comprise a tuner 25 for selecting particular frequencies. This tuner may automatically and periodically sweep through the reasonable frequency range and, thus, check all available programs in said frequency ranges.

27 may be some kind of data extraction which extracts data from the received programs. E.g., a program identifier (program code CID) sent with the broadcast data may be extracted. Likewise, frequency information, channel information or signal level information may be collected and assembled. A comparator 28 compares information from the respectively received programs with information from the designating means 21. E.g., the designating means may show a certain station or program code, such as, e.g. "SWR 3", as a designated program.

The comparator 28 checks whether the extracted program code CID identifies this designation. It may further compare the signal level with a possibly preset signal level. Other criteria may be used for determining availability of a designated program. Depending on said comparisons, information relating to the availability of a specific program may be generated. E.g., if the program code extracted from an instantly received program is not in the list of designated programs, no signal is generated and nothing particular is made. Rather, frequency sweep is continued. Further, if, e.g., a signal relating to a designated program is received and a corresponding program code CID is recognized, the availability of said program may be signalled to a user, or a further signal level check may follow to make sure that the signal is of sufficient quality, before the availability is signalled.

Positively signalling availability of a designated program may be done in one or more of a plurality of possible ways:
- A separate visual or acoustical output may be provided, e.g., a particular lamp or display zone on an LCD display.
- The "available"-signal may be merged into the presently selected program, e.g., by superimposing a voice message ("SWR 3 is available now") on the otherwise presented program, or by projecting characters into an otherwise displayed TV program. Appropriate combining means 29 may thus be provided to combine the selected program data with the data relating to availability of a designated program.

A take-over feature (e.g. in a menu) or button may be provided to allow taking over of a designated program, that is found available, as a selected program. Another possibility is schematically shown by signal line 30: Upon availability of a designated program, the tuner 24 of the reception means 20 may be tuned to the designated program, thus immediately selecting the designated program and presenting it to a user. Likewise, the ON/OFF-status of the receiver may be influenced by said available recognition. E.g., a switched-off apparatus may be automatically switched on when a designated program becomes available.

Preferably, the receiver is designed such that receiving a selected program and presenting it to a user can be done concurrently to monitoring the respective frequency band for availability of a designated program. In one hardware option, as schematically shown in Fig. 2, two tuners 24 and 25 are provided, the one for receiving the selected program, and the other one for sweeping through the entire frequency range in order to monitor said range for availability of the designated program. Thus, the presentation of a selected program may be done in the "foreground", whereas monitoring for availability of a designated program may be done in the "background". This monitoring may also take place when the receiver and the overall apparatus is switched off.

The monitoring means 22 may monitor the received programs also for other qualities, e.g., for content markers, like "traffic news", "weather news", and the like, and generate corresponding messages.

The above-described receiver may be part of a radio or of a TV set. Depending on its field of use it may be adapted to sweep through the entire relevant frequency range by means of the tuner 25, in order to scan the available programs and the data and information received therefrom. Such scanning may be made periodically, e.g., once every minute, or the like.

A plurality of programs may be designated and may be stored as such. The designation may comprise priority settings. Thus, a priorized list of designated stations may be stored. The monitoring means may sweep through the entire frequency range, may generate a list of available programs, and may finally cause selection of the most preferred designated program, if not already selected.

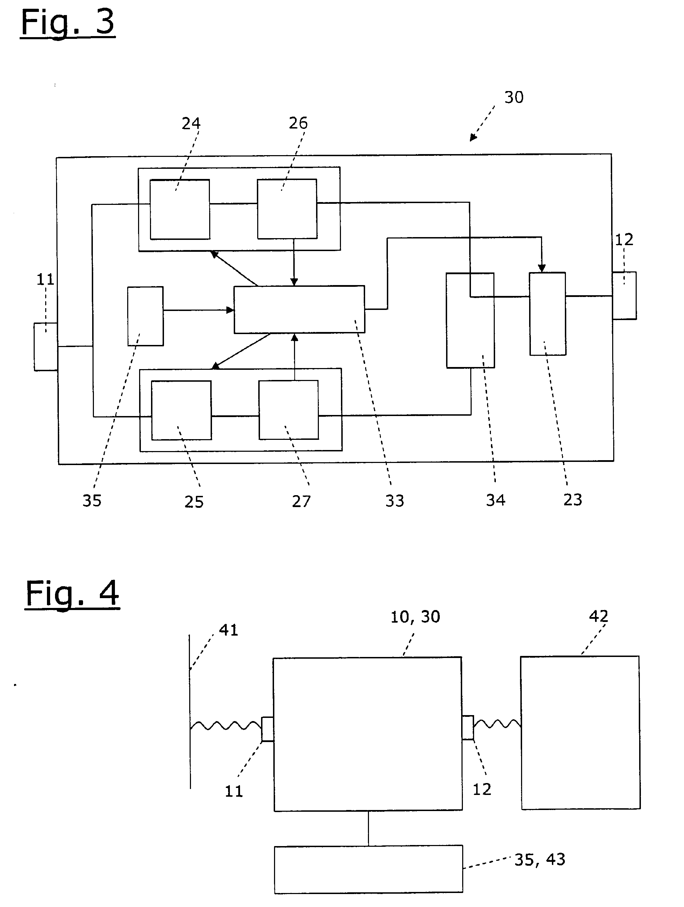

Fig. 3 shows a slightly modified hardware concept with same reference numerals addressing same components: Instead of distinct reception means 20 and monitoring means 22 two more or less identical receiving units 31 and 32 may be provided such that both of them are capable of monitoring and receiving. While the one of them performs usual reception of a selected program to be presented to a listener or viewer, the other performs monitoring for a designated program. A controller 33 controls the functions and operations of said units 31 and 32. When a designated program is found available, the two units 31 and 32 swap functions such that the formerly monitoring unit acts as receiving unit and its output is presented to a listener or viewer, while the formerly reception unit acts as monitoring unit, its output being blocked from presentation to a user. Swapping the two units 31 and 32 may be done by appropriate means automatically or upon further criteria, e.g. a prompted user confirmation/input or the like. The units supply extracted data to the controller 33 which checks for availability of a designated program and which, in response to said checks, may swap over the function of the two units 31, 32 and may at the same time swap over the program presented to a user trough some kind of switch means 34. The controller 33 may also affect a signalling means 23 to output information signals about availability of a designated program to the user, e.g. by merging it into the usual output signal flow. In turn, the user may input commands for effecting or preventing swapping through input means 35. Likewise, designation of programs may be made by input means 35 with controller 33.

Fig. 4 shows an overall TV/radio set. It comprises an antenna 41, a receiver 10, 30 as described above with reference to Figs. 2 ands 3, a display 42 (LCD, CRT) and not shown speakers as well as appropriate input means 43, 35 with appropriate knobs, dials, keys and the like. The input may also at least in parts be done over a touch screen. Not shown are power supply, ground wiring, shielding and the like.

## Claims

1. Receiver (10) for TV and/ or radio programs, comprising
a reception means (20) for selectively receiving TV and/or radio signals and processing them,
**characterized by**
designating means (21) for designating at least one TV and/or radio program of interest,
monitoring means (22) for monitoring availability of the one or more designated TV and/or radio programs, and
signalling means (23) for generating signals to a user carrying information relating to availability of one or more designated TV and/or radio programs.

2. Receiver for TV and/or radio programs, comprising
a reception means (20) for selectively receiving TV and/or radio signals and processing them,
**characterized by**
designating means (21) for designating at least one TV and/or radio program of interest,
monitoring means (22) for monitoring availability of the one or more designated TV and/or radio programs, and
change-over means (30) for changing over the program received by the reception means in accordance with availability of one or more designated TV and/or radio programs.

3. Receiver according to one of the preceding claims, **characterized in** comprising an antenna or a terminal (11) for an antenna for wireless TV and/or radio signal reception.

4. Receiver according to one of the preceding claims, **characterized in that** the monitoring means searches a TV and/or radio frequency band.

5. Receiver according to claim 4, **characterized in that** the monitoring means operates in the background.

6. Receiver according to one of the preceding claims, **characterized in that** the monitoring means monitors availability of a designated TV and/or radio program with reference to one or more of frequency (f), channel number (ch), program code (CID), signal level (P).

7. Receiver according to one of the preceding claims, **characterized in that** the designating means comprises input means for inputting a designated TV and/or radio program by a user.

8. Receiver according to one of the preceding claims, **characterized in that** the designating means comprises memory means for holding information identifying one or more TV and/or radio programs as designated TV and/or radio programs.

9. Receiver according to one of the preceding claims, **characterized in that** the reception means comprises a first tuner (24) and the monitoring means comprises a second tuner (25).

10. Receiver according to one of the preceding claims, **characterized in that** the monitoring means also monitors availability of TV and/or radio programs with certain content.

11. Receiver according to one of the preceding claims, **characterized in** comprising combining means (29) for combining the signals from the reception means and from the signalling means to a single output signal.

12. A radio comprising a receiver (10) for radio programs according to one of the preceding claims.

13. A TV set comprising a receiver (10) for TV programs according to one of the claims 1 to 11.

14. Method for monitoring TV and/or radio programs,
**characterized by**
designating at least one TV and/or radio program of interest,
monitoring availability of the one or more designated TV and/or radio programs, and
generating signals to a user carrying information relating to availability of one or more designated TV and/or radio programs or changing over the received program in accordance with availability of one or more designated TV and/or radio programs.

15. Method according to claim 14, **characterized by** the step of selectively receiving TV and/or radio signals and processing and outputing them concurrently to the monitoring.

16. Method according to claim 14 or 15, **characterized in that** a plurality of programs may be designated and may be stored as such.

17. Method according to one of the claims 14 to 16, **characterized in that** a priority may be given by a user to designated program.

18. Method according to one of the claims 14 to 17, **characterized in that** a priority may be given by a user to a designated program, and said signal generating for a user or said changing over the received program is made with reference to the given priority.

19. Method according to one of the claims 14 to 18, **characterized in that**, for monitoring, a frequency range is scanned, data (CID) are extracted from the programs received during said scan and are compared with data obtained by said designation.

20. Method according to one of the claims 14 to 19, **characterized in that** availability is also judged with reference to signal power of a specific program.
